# FASCICULE DE BREVET EUROPEEN

(11) **EP 1 921 028 B1**
(45) Date de publication et mention de la délivrance du brevet: **31.03.2010**
(21) Numéro de dépôt: 07117963.4
(22) Date de dépôt: 05.10.2007
(51) Int. Cl.: B65G 47/14

(54) **Dispositif centrifuge d'alimentation en préformes couchées et alignées les unes à la suite des autres**
Zentrifugalvorrichtung zur Zuführung von liegenden und hintereinander aufgereihten Formteilen
Centrifugal device for feeding preforms layered and aligned after one another

(30) Priorité: 10.11.2006 FR 0609867
(43) Date de publication de la demande: 14.05.2008
(73) Titulaire: Sidel Participations, 76930 Octeville Sur Mer (FR)
(72) Inventeur: Charpentier, Alain, 76930 Octeville sur Mer (FR); Diesnis, Daniel, 76930, OCTEVILLE SUR MER (FR)
(74) Mandataire: Cabinet Plasseraud

(56) Documents cités:
- EP-A- 1 650 143
- EP-A- 1 690 813
- US-A- 5 954 185

## Description

La présente invention concerne d'une façon générale le domaine de l'alimentation en préformes d'installations de fabrication de récipients en matière thermoplastique notamment par soufflage ou étirage soufflage de préformes chauffées et elle concerne plus spécifiquement des perfectionnements apportés aux dispositifs centrifuges d'alimentation en préformes en matière thermoplastique couchées et alignées à partir de préformes reçues en vrac, ledit dispositif comprenant :
- un anneau transporteur sensiblement horizontal tournant autour d'un axe,
- un disque central rotatif tournant dans le même sens que l'anneau et d'axe incliné par rapport à celui de l'anneau,
- le disque et l'anneau étant distants l'un de l'autre dans une zone de chargement en vrac des préformes sur le disque et étant sensiblement tangents dans une zone de transfert des préformes du disque sur l'anneau située à un niveau supérieur à celui de la zone de chargement,
- un guide latéral entourant périphériquement l'anneau pour retenir les préformes transférées sur l'anneau, et
- un canal de sortie ouvert dans le guide périphérique et s'étendant sensiblement tangentiellement à l'anneau pour l'évacuation des préformes couchées et alignées.

Les exploitants d'installations de fabrication de récipients en matière thermoplastique notamment par soufflage ou étirage soufflage de préformes chauffées souhaitent des cadences de production toujours plus élevées. Des cadences de fabrication d'un ordre de grandeur de 40 000 récipients par heure sont actuellement courantes et, devant les exigences des exploitants, les études s'orientent maintenant vers des cadences supérieures, de l'ordre de 60 000 à 80 000 récipients par heure.

Pour ce qui concerne l'alimentation des préformes aux installations de ce genre, les habituels agencements à élévateur, trémie en hauteur et toboggan d'alimentation des préformes par gravité à l'entrée des installations peuvent certes donner satisfaction pour les cadences précitées pratiquées actuellement, mais ne peuvent plus supporter les cadences notablement plus élevées envisagées pour l'avenir.

En outre, les dispositifs d'alimentation actuels présentent des hauteurs importantes qui non seulement exigent de disposer d'ateliers de grande hauteur et donc onéreux, mais nécessitent un important matériel accessoire (échelles d'accès en hauteur, passerelles, rambardes, ...) propre à assurer la sécurité du personnel appelé à travailler dans les parties hautes.

Un dispositif pour l'alimentation des préformes est décrit dans EP-A-1 690 813.

Les recherches actuelles sont donc orientées vers des dispositifs d'alimentation au sol, de préférence à hauteur de ceinture d'homme, de manière à en faciliter l'entretien et la surveillance en fonctionnement.

C'est ainsi qu'ont pu être développés des dispositifs centrifuges d'alimentation du type mentionné au préambule, dits également dispositifs à bol tournant en raison de leur conformation générale, qui présentent une hauteur réduite et qui permettent d'alimenter en préforme notamment des transporteurs sensiblement horizontaux à fils ou bandes parallèles.

Un problème important que doivent résoudre les dispositifs d'alimentation en préformes réside dans la nécessité d'éliminer les préformes indésirables, c'est-à-dire notamment les préformes hors normes n'appartenant pas au type traité et présentant en particulier un diamètre et/ou une longueur différents de ceux des préformes traitées, les préformes emboîtées (assimilables à une préforme de longueur excessive), etc. L'élimination de ces préformes indésirables est d'une importance extrême car, si elles viennent à être introduites dans l'installation de fabrication de récipients, elles peuvent provoquer des dommages considérables dans l'installation, voire la destruction partielle de celle-ci, avec les temps d'immobilisation et les pertes financières inhérents à la remise en état et/ou à la reconstruction des parties endommagées.

On connaît divers agencements d'élimination des préformes indésirables adaptés aux dispositifs d'alimentation actuellement exploités de façon courante, mais ces agencements ne sont pas transposables, au moins de façon simple, dans le contexte de dispositifs centrifuges d'alimentation.

L'invention a pour but de répondre à cette attente et de proposer des moyens perfectionnés permettant d'éliminer les préformes indésirables dans des dispositifs centrifuges d'alimentation, lesdits moyens devant dans toute la mesure du possible être structurellement simples et faciles à fabriquer et à mettre en oeuvre, d'une grande rapidité de fonctionnement pour être propres à donner satisfaction aux très grandes cadences de fabrication, et ne pas entraîner de modifications substantielles dans la conception et le fonctionnement des dispositif centrifuge d'alimentation.

A ces fins, l'invention propose un dispositif centrifuge d'alimentation en préformes en matière thermoplastique couchées et alignées à partir de préformes reçues en vrac tel que mentionné au préambule, lequel dispositif, étant agencé conformément à l'invention, selon revendication 1, se caractérise en ce qu'il comporte en outre :
- un organe mobile monté sur le guide latéral en aval (considéré dans le sens de rotation de l'anneau transporteur) de la susdite zone de transfert et en amont de l'ouverture dudit canal de sortie et propre à occuper une position de repos dans laquelle il n'affecte pas le déplacement des préformes entraînées par l'anneau transporteur et une position opérationnelle dans laquelle les préformes sont amenées à quitter l'anneau transporteur,
- des moyens d'actionnement associés fonctionnellement audit organe mobile pour provoquer sélectivement son déplacement entre ses deux positions de repos et opérationnelle, et
- des moyens de détection situés en amont dudit organe mobile et propres à détecter une préforme indésirable présente sur l'anneau transporteur, lesdits moyens de détection étant fonctionnellement connectés aux moyens d'actionnement de l'organe mobile pour, lorsqu'une préforme indésirable est détectée, actionner l'organe mobile dans sa position opérationnelle appropriée à l'éjection de la préforme indésirable.

L'agencement proposé conformément à l'invention peut donner lieu à deux modes principaux de réalisation selon que la préforme indésirable est éjectée vers l'extérieur et évacuée ou bien est éjectée vers l'intérieur et renvoyée dans le bol tournant pour être réinsérée dans le lot des préformes à traiter.

Ainsi, dans un premier mode de réalisation possible, on prévoit
que l'organe mobile soit une trappe mobile, et alors avantageusement déplaçable, notamment pivotante, vers l'extérieur du guide latéral, qui est propre à fermer au moins partiellement une ouverture pratiquée dans le guide latéral et
que les moyens d'actionnement soient propres à déplacer ladite trappe sous la commande des moyens de détection et ouvrir ladite ouverture du guide latéral de manière que la préforme indésirable détectée soit éjectée par l'ouverture sous l'action de la force centrifuge.

Un tel dispositif est approprié pour l'élimination définitive de préformes indésirables, telles notamment les préformes emboîtées de façon serrée, les préformes hors normes (diamètre et/ou longueur différentes de celles des préformes à traiter, préformes présentant des défauts, etc.).

Toutefois, eu égard à la vitesse élevée de fonctionnement du dispositif d'alimentation et aux temps nécessaires à la manoeuvre de la trappe, il est possible, si les préformes sont très rapprochées les unes des autres sur l'anneau transporteur, que non seulement une préforme indésirable soit éjectée par la trappe, mais aussi la préforme qui lui succède, voire quelques préformes qui lui succèdent et qui n'ont pas lieu d'être éjectées. Il en résulte une élimination de préformes bonnes à traiter et, pour éviter une perte, la nécessité de trier manuellement le lot des préformes éliminées pour récupérer les préformes correctes et les remettre dans le circuit.

Dans un tel mode de réalisation, il est intéressant que le dispositif comporte en outre :
un doigt mobile auxiliaire disposé en amont de la trappe et propre à occuper une position effacée dans laquelle il n'engage pas la trajectoire des préformes sur l'anneau transporteur et une position d'éjection pour laquelle il engage la trajectoire des préformes sur l'anneau transporteur et rejette les préformes vers l'intérieur sur le disque rotatif, et
des moyens d'actionnement dudit doigt mobile propre à lui faire occuper sélectivement l'une ou l'autre des deux susdites positions, lesdits moyens d'actionnement étant placés sous la dépendance des moyens de détection de manière telle que le doigt mobile soit dans sa position effacée lors du passage de la préforme indésirable détectée et soit dans sa position d'éjection lors du passage d'au moins la première préforme suivant la préforme indésirable détectée pour repousser vers l'intérieur sur le disque rotatif ladite première préforme.

Grâce à cette disposition optionnelle, on évite que des préformes acceptables soient évacuées vers l'extérieur, et leur renvoi dans le bol tournant les maintient dans le circuit des préformes à traiter et ne fait que retarder leur traitement.

Dans un autre mode de réalisation possible, on prévoit que l'organe mobile est un doigt mobile disposé en aval de la susdite zone de transfert et propre à occuper, sous l'action des moyens d'actionnement, une position effacée dans laquelle il n'engage pas la trajectoire des préformes sur l'anneau transporteur et une position d'éjection pour laquelle il engage la trajectoire des préformes sur l'anneau transporteur et rejette les préformes vers l'intérieur sur le disque rotatif.

Un tel dispositif est approprié lorsque le défaut qui rend la préforme indésirable n'est que provisoire et non intrinsèque et peut disparaître par exemple sous l'action d'un choc, par exemple le choc subi lorsque la préforme retombe dans le bol tournant. Ce dispositif convient tout particulièrement pour des préformes emboîtées de façon non serrée, c'est-à-dire des préformes présentant des géométries telles que le corps de l'une peut être introduit dans le corps de l'autre sans contact et donc sans serrage ; il suffit de les faire retomber dans le bol tournant pour les séparer.

Un tel dispositif évite, là encore sans intervention manuelle, d'évacuer vers l'extérieur et donc définitivement des préformes qui peuvent cependant être traitées après élimination du facteur les rendant provisoirement indésirables.

Pour ce qui concerne plus particulièrement les préformes emboîtées, on comprend que le fait que des préformes soient emboîtées de façon serrée ou non serrée repose essentiellement sur la géométrie de leur conformation, et surtout sur la géométrie de conformation de leur corps. Or les exploitants d'installations de fabrication de récipients thermoplastiques exigent une grande universalité de fonctionnement, c'est-à-dire que les installations soient capables de fabriquer des récipients divers à partir de préformes diverses dont certains types peuvent donner lieu à des emboîtements serrés tandis que d'autres types peuvent donner lieu à des emboîtements non serrés. De ce fait, il peut être souhaitable, pour accroître l'universalité de fonctionnement du dispositif d'alimentation conforme à l'invention, qu'il soit équipé conjointement des deux dispositifs d'éjection précités, c'est-à-dire d'une trappe mobile selon l'une quelconque des dispositions exposées plus haut et d'un doigt mobile selon la disposition exposée ci-dessus, ce grâce à quoi l'utilisateur a le choix entre l'élimination des préformes indésirables vers l'extérieur à travers l'ouverture du guide latéral ou vers l'intérieur sur le disque rotatif.

Dans ce cas, il est possible que le doigt mobile soit disposé en aval de la trappe mobile. Cependant, il peut être plus intéressant que le doigt mobile soit disposé en aval de la trappe mobile et il devient alors possible de simplifier la structure en prévoyant que le doigt mobile soit disposé en amont de la trappe mobile et soit confondu avec le doigt mobile auxiliaire d'éjection d'au moins la première préforme suivant la préforme indésirable détectée lorsque la trappe mobile est opérationnelle ; les moyens d'actionnement du doigt sont alors adaptés au type d'éjection souhaité vers l'extérieur en liaison avec la trappe ou vers l'intérieur. Dans une autre variante de réalisation conduisant aussi à une simplification de structure, on peut faire en sorte que la trappe mobile soit agencée pour pouvoir être déplacée de part et d'autre de sa position de repos de manière à assumer également la fonction du doigt mobile.

Les dispositions conformes à l'invention qui viennent d'être exposées sont structurellement simples et ne nécessitent pas des modifications importantes dans l'agencement général du dispositif d'alimentation ; de ce fait, elles sont relativement peu coûteuses à mettre en oeuvre alors qu'elles se révèlent particulièrement efficaces et fiables. En particulier, elles offrent l'avantage d'une sélection entièrement automatique, sans arrêt du disque rotatif, et susceptible de fonctionner efficacement à des vitesses élevées exigées aujourd'hui pour les installations à grande cadence de production.

L'invention sera mieux comprise à la lecture de la description détaillée qui suit de certains modes de réalisation préférés donnés uniquement à titre d'exemples nullement limitatifs. Dans cette description, on se réfère aux dessins annexés sur lesquels :
- la figure 1 est une vue schématique en perspective d'un dispositif centrifuge d'alimentation en préformes du type que l'invention vise à perfectionner,
- la figure 2 est une vue schématique en perspective d'une partie substantielle du dispositif centrifuge d'alimentation de la figure 1 équipé des aménagements conformes à l'invention,
- la figure 3 est une vue à plus grande échelle d'une partie du dispositif centrifuge d'alimentation de la figure 2 montrant un premier mode de réalisation conforme à l'invention,
- la figure 4 est une vue à plus grande échelle d'une partie du dispositif centrifuge d'alimentation de la figure 2 montrant une variante de réalisation préférée du premier mode de réalisation de la figure 3, et
- la figure 5 est une vue à plus grande échelle d'une partie du dispositif centrifuge d'alimentation de la figure 2 montrant un second mode de réalisation conforme à l'invention.

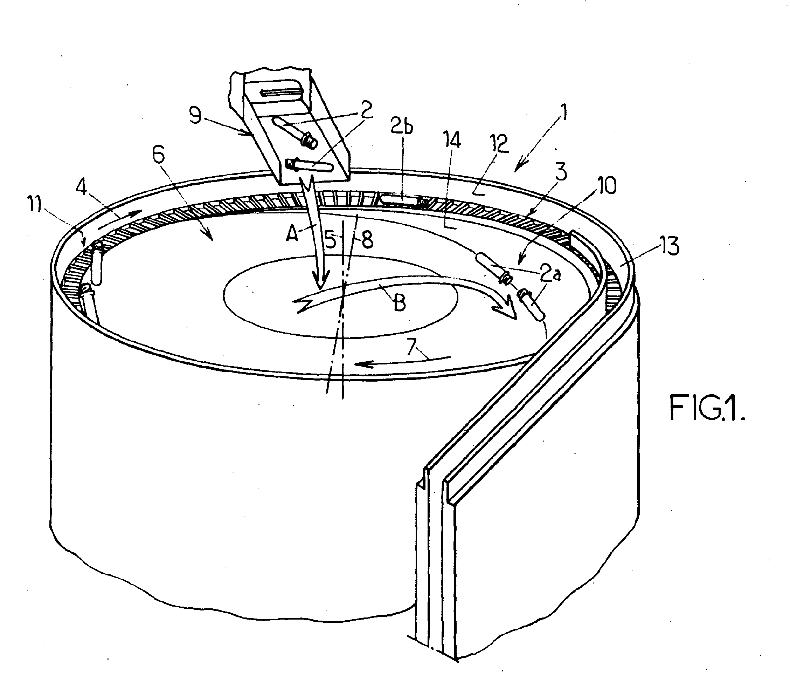

A la figure 1 est représenté de façon schématique un dispositif centrifuge, désigné dans son ensemble par la référence numérique 1, d'alimentation en préformes 2 en matière thermoplastique telle que du PET de manière telle que les préformes 2 reçues en vrac dans le dispositif (préformes 2a sur la figure 1) soient délivrées, à la sortie du dispositif, couchées et alignées les unes à la suite des autres (préformes 2b sur la figure 1).

Le dispositif 1 comprend notamment :
- un anneau 3 transporteur sensiblement horizontal tournant (flèche 4) autour d'un axe 5 notamment sensiblement vertical,
- un disque 6 central rotatif, disposé intérieurement à l'anneau 3 transporteur et tournant (flèche 7) dans le même sens que l'anneau 3 transporteur et d'axe 8 incliné (typiquement de l'ordre de 10°) par rapport à celui 5 de l'anneau 3 transporteur, la vitesse de rotation du disque 6 étant de préférence un peu moindre que celle de l'anneau 3 transporteur,
- des moyens 9 de déchargement propres à délivrer en vrac des préformes 2 sur le disque 6, lesquels moyens de déchargement peuvent être de tout type approprié pour amener les préformes en quantité requise,
- le disque 6 et l'anneau 3 transporteur étant distants l'un de l'autre dans une zone 10 de chargement en vrac des préformes 2a sur le disque 6 et étant sensiblement tangents dans une zone 11 de transfert des préformes 2a du disque 6 sur l'anneau 3 transporteur située à un niveau supérieur à celui de la zone 10 de chargement,
- un guide 12 latéral entourant périphériquement l'anneau 3 transporteur pour retenir les préformes 2b transférées, dans la zone 11 de transfert, depuis le disque 6 sur l'anneau 3 transporteur, et
- un canal 13 de sortie ouvert dans le guide 12 périphérique et s'étendant sensiblement tangentiellement à l'anneau 3 transporteur pour l'évacuation des préformes 2b couchées et alignées les unes à la suite des autres.

Bien que cela ne soit pas un impératif, dans le mode de réalisation préféré illustré à la figure 1, le disque 6 s'inscrit dans le cercle formé par la projection verticale de l'anneau 3 transporteur, c'est-à-dire qu'il occupe toute la surface entourée par l'anneau 3 transporteur.

Les préformes 2a déversées en vrac par les moyens 9 de déchargement tombent sur le disque 6 en un point quelconque de celui-ci, par exemple au voisinage du centre comme illustré (flèche A), puis, entraînées par gravité en raison de l'inclinaison du disque 6, glissent vers la zone 10 de chargement (flèche B) où elles viennent buter contre la paroi 14 délimitant celle-ci tout en commençant à être entraînées en rotation par le disque 6. Là, entraînées par le disque 6 dans un parcours circulaire le long de la paroi 14, elles sont plaquées le long de cette paroi 14 sous l'action de la force centrifuge. Parvenues dans la zone 11 de chargement où le bord du disque 6 tangente l'anneau 3 transporteur, les préformes 2a, sous l'action de la force centrifuge, passent sur l'anneau 3 transporteur qui les entraînent le long du guide 12 latéral. Au cours de ce déplacement, les préformes 2b sont maintenues allongées le long du guide 12 latéral sous l'action de la force centrifuge. Finalement, les préformes 2b couchées et disposées alignées les unes à la suite des autres sont introduites par l'anneau 3 transporteur dans l'entrée du canal 13 de sortie où elles sont reprises par d'autres moyens de déplacement.

On soulignera que le dispositif centrifuge 1 d'alimentation en préformes 2b couchées et alignées les unes à la suite des autres qui vient d'être brièvement décrit, également dénommé dispositif d'alimentation à bol tournant, est conçu pour délivrer les préformes en position couchée et alignées les unes à la suite des autres, mais sans orientation spécifique des préformes col vers l'avant ou col vers l'arrière ; les préformes sont donc délivrées indifféremment dans l'une ou l'autre position.

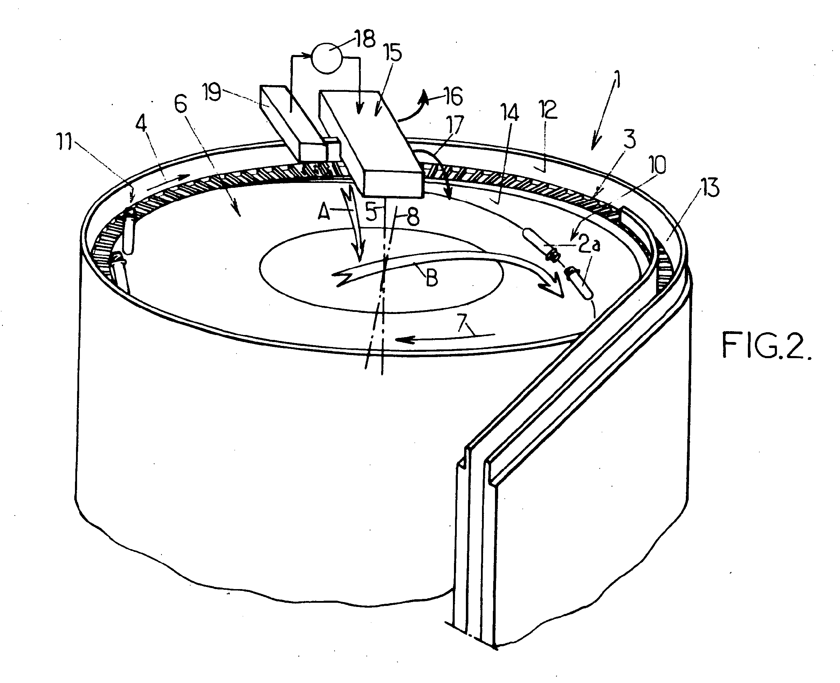

Pour exposer maintenant les dispositions que l'invention propose d'introduire dans le dispositif de la figure 1 aux fins d'élimination des préformes indésirables, on se reportera à la figure 2 qui reproduit l'agencement général du dispositif de la figure 1 à l'exception cependant des moyens 9 de déchargement qui, bien que toujours présents (comme imagé par la flèche A qui est laissée en place), n'ont pas été représentés afin de laisser de la place pour la représentation des moyens supplémentaires nécessaires à la mise en oeuvre de l'invention.

Pour procéder à l'élimination des préformes indésirables (préformes emboîtées, préformes hors normes, préformes mal formées, etc), le dispositif 1 centrifuge d'alimentation comporte, comme montré à la figure 2 :
- un organe 15 mobile monté sur le guide 12 latéral en aval (considéré dans le sens 4 de rotation de l'anneau 3 transporteur) de la zone 11 de transfert et en amont de l'ouverture du canal 13 de sortie et propre à occuper
   - une position de repos dans laquelle il n'affecte pas le déplacement des préformes 2b entraînées par l'anneau 3 transporteur et dans laquelle notamment il assure la continuité de surface avec le guide 12 latéral et
   - une position opérationnelle dans laquelle les préformes 2b qui passent à son droit sont amenées à quitter l'anneau 3 transporteur que ce soit vers l'extérieur du dispositif (flèche 16) ou vers l'intérieur du dispositif (flèche 17),
- des moyens 18 d'actionnement associés fonctionnellement audit organe 15 mobile pour provoquer sélectivement son déplacement entre ses deux positions de repos et opérationnelle, et
- des moyens 19 de détection situés en amont dudit organe 15 mobile, mais en aval de la susdite zone 11 de chargement et de préférence non loin de celle-ci, et propres à détecter une préforme indésirable présente sur l'anneau 3 transporteur, lesdits moyens 19 de détection étant fonctionnellement connectés aux moyens 18 d'actionnement de l'organe 15 mobile pour, lorsqu'une préforme indésirable est détectée, actionner l'organe 15 mobile dans sa position opérationnelle appropriée à provoquer l'éjection de la préforme indésirable.

En raison de la présence du guide 12 latéral, les moyens 19 de détection doivent être disposés de manière que leur fonctionnement ne soit pas perturbé par la présence du guide 12 latéral ; de façon pratique, les moyens 19 de détection sont situés au-dessus de l'anneau 3 transporteur et sensiblement à l'aplomb de celui-ci, voire sont déportés vers le centre du dispositif au-dessus du disque 6 avec une ligne de visée oblique. En alternative, les moyens de détection peuvent être placés de part et d'autre du guide 12 latéral (ce mode de réalisation n'est pas représenté sur les dessins annexés).

Compte tenu de la vitesse relativement élevée de rotation de l'anneau 3 transporteur, le temps disponible pour le déplacement de l'organe 15 mobile à partir de l'instant où les moyens 19 de détection ont détecté une préforme indésirable, il est nécessaire de disposer de moyens 18 d'actionnement à temps de réponse très bref et de faire en sorte que l'organe 15 mobile présente une inertie aussi réduite que possible.

Les moyens 19 de détection peuvent être de tout type approprié selon le(s) critère(s) d'élimination retenu(s) : par exemple détection d'une dimension des préformes (typiquement longueur et/ou dimension transversale des préformes), détection de la distance entre deux préformes consécutives, détection du profil des préformes qui semble la solution la plus intéressante car étant celle qui fournit l'information la plus complète propre à couvrir plusieurs critères de sélection.

Les dispositions qui viennent d'être exposées peuvent donner lieu à deux modes de réalisation principaux selon le sens, vers l'extérieur (flèche 16) ou vers l'intérieur (flèche 17), d'éjection des préformes indésirables.

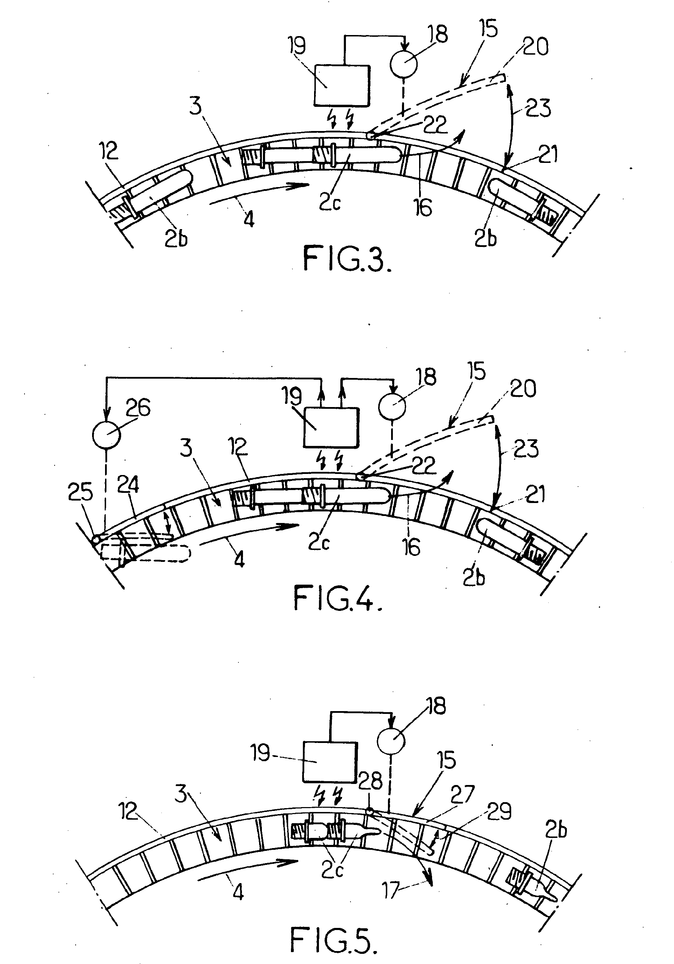

Un premier mode de réalisation possible est illustré schématiquement à la figure 3 qui est une vue partielle de l'anneau 3 transporteur, le reste du dispositif n'étant pas reproduit puisque demeurant identique à ce qui est montré aux figures 1 et 2. Dans cet agencement, l'organe 15 mobile est constitué par un tronçon du guide 12 latéral agencé sous forme d'une trappe 20 déplaçable de préférence vers l'extérieur et propre à fermer une ouverture 21 pratiquée dans le guide 12 latéral. Plus spécifiquement, dans un exemple de réalisation préféré illustré à la figure 3, la trappe 20 déplaçable est rotative vers l'extérieur (double flèche 23) autour d'une charnière 22 disposée du côté amont de l'ouverture 21. L'ouverture 21 et la trappe 20 doivent présenter une longueur au moins égale et de préférence sensiblement supérieure à la longueur de la plus grande préforme à éliminer ; notamment, s'agissant d'éliminer des préformes 2c emboîtées comme montré à la figure 3, l'ouverture 21 et la trappe 20 doivent avoir une longueur au moins égale ou sensiblement supérieure à celle de deux préformes emboîtées.

Lorsque les moyens 19 de détection détectent une préforme indésirable, par exemple un ensemble de deux préformes 2c emboîtées, ils commandent les moyens 18 d'actionnement qui ouvrent la trappe 20 (en tirets sur la figure 3). Eu égard à la vitesse relativement élevée de rotation de l'anneau 3 transporteur, les préformes sont entraînées tout en étant repoussées contre le guide 12 latéral sous l'action de la force centrifuge ; lorsque la trappe 20 est ouverte en synchronisme avec l'occurrence d'une préforme détectée par les moyens 19, la préforme 2c indésirable, ne trouvant plus d'appui radial au passage devant l'ouverture 21, est éjectée à travers celle-ci vers l'extérieur du dispositif (flèche 16).

Compte tenu de la vitesse relativement élevée de rotation de l'anneau 3 transporteur, il est possible que la préforme 2b suivant la préforme 2c indésirable qui est éjectée à travers l'ouverture 21 se présente devant cette ouverture alors que la trappe 20 n'est pas encore refermée. De ce fait, en particulier pour des cadences élevées avec les préformes 2b se succédant de façon très rapprochée, une ou plusieurs préformes 2b non indésirables succédant à une préforme 2c indésirable risquent d'être entraînées malencontreusement hors du dispositif, ce qui représente une perte inutile.

Pour éviter d'avoir à procéder à un tri manuel parmi les préformes rejetées pour récupérer les préformes valides, il est proposé d'aménager le dispositif 1 centrifuge d'alimentation de la manière représentée à la figure 4. Un doigt 24 mobile auxiliaire est prévu en amont de la trappe 20 et agencé pour pouvoir occuper sélectivement une position effacée ou position de repos (par exemple dans la continuité du guide 12 latéral, montrée en trait plein à la figure 4) et une position opérationnelle dans laquelle il s'étend en travers d'au moins une partie de l'anneau 3 transporteur (en tirets sur la figure 4) de sorte qu'il engage la trajectoire des préformes sur l'anneau transporteur et rejette celles qui se présentent vers l'intérieur du dispositif où elles retombent sur le disque 6 rotatif. Le doigt 24 mobile auxiliaire peut avantageusement être constitué de façon simple sous forme d'un tronçon du guide 12 latéral qui est rendu déplaçable, de préférence rotatif autour d'une charnière 25 disposée du côté amont. Le doigt 24 mobile auxiliaire est mû par des moyens 26 d'actionnement eux-mêmes commandés par les moyens 19 de détection en synchronisme avec la trappe 20. Grâce à cet agencement, on évite que des préformes valides soient éjectées hors du dispositif centrifuge d'alimentation et les préformes déviées par le doigt 24 mobile auxiliaire sont automatiquement remises dans le circuit.

Les dispositions qui viennent d'être décrites en regard des figures 3 et 4 sont notamment destinées à l'élimination des préformes emboîtées, bien qu'elles soient également appropriées pour éliminer des préformes indésirables sur la base d'autres critères comme indiqué plus haut. Toutefois, si certaines préformes (par exemple préformes à corps cylindrique de sensiblement même diamètre que celui du col) possèdent une géométrie telle que leur emboîtement est un emboîtement serré et doivent être éliminées de l'installation, il existe aussi des préformes (par exemple préformes à corps de diamètre sensiblement inférieur à celui de leur col) qui peuvent se présenter engagées l'une dans l'autre sans qu'il s'agisse d'un emboîtement serré (emboîtement non serré) : la séparation de deux préformes ainsi engagées l'une dans l'autre à emboîtement non serré est aisée (un simple choc peut suffire) et il n'y a pas lieu de les éliminer.

C'est pour traiter plus spécifiquement ce problème qu'il est proposé un second mode de réalisation possible des dispositions de l'invention illustré schématiquement à la figure 5 qui est une vue partielle de l'anneau 3 transporteur. L'organe 15 mobile est un doigt 27 mobile disposé en aval de la zone 11 de transfert et propre à occuper sélectivement, sous l'action des moyens 18 d'actionnement, une position effacée ou position de repos (par exemple dans la continuité du guide 12 latéral, montrée en trait plein à la figure 5) dans laquelle il n'engage pas la trajectoire des préformes sur l'anneau 3 transporteur et une position opérationnelle ou position d'éjection dans laquelle il engage la trajectoire des préformes sur l'anneau 3 transporteur et les rejette vers l'intérieur sur le disque 6 rotatif. En tombant sur le disque 6 rotatif, les préformes 2c emboîtées de façon non serrée se séparent sous l'action du choc. Le doigt 27 mobile peut avantageusement être constitué de façon simple sous forme d'un tronçon du guide 12 latéral qui est rendu déplaçable, de préférence rotatif (double flèche 29) autour d'une charnière 28 disposée du côté amont.

Les exploitants des installations de fabrication de récipients en matière thermoplastique, notamment en PET, par soufflage ou étirage-soufflage de préformes souhaitent que leurs installations soient d'une grande universalité de fonctionnement et en particulier soient à même de produire des récipients de types très divers à partir de préformes elles aussi de types très divers. En particulier, ils peuvent souhaiter que les installations soient à même de traiter indifféremment sélectivement des préformes à géométrie favorisant des emboîtements serrés et des préformes à géométrie conduisant à des emboîtements non serrés. Dans ces conditions, il est nécessaire que le dispositif centrifuge d'alimentation en préformes soit, quant à lui, apte à traiter efficacement les deux types de préformes.

A cette fin, on peut concevoir que le dispositif centrifuge d'alimentation en préformes combine les dispositions caractérisant les deux modes de réalisation exposés plus haut en regard de la figure 3 (ou sa variante de la figure 4) et de la figure 5. L'exploitant sélectionnera alors le mode de fonctionnement du dispositif en fonction du type de préformes traitées.

Bien que, dans un tel agencement, la position du doigt 27 mobile soit indifférente du point de vue des fonctions à assurer et que ce doigt puisse parfaitement être disposé en aval de la trappe 20 mobile, une simplification de structure pourrait cependant être obtenue en positionnant le doigt 27 mobile en amont de la trappe 20. Dans ce cas en effet, le doigt 27 mobile peut également assumer le rôle du doigt 24 mobile auxiliaire évoqué plus haut dans l'agencement de la figure 4. Il suffit d'adapter alors la commande d'actionnement de ce doigt unique au mode d'éjection choisi, vers l'extérieur ou vers l'intérieur du dispositif.

Une autre variante de réalisation, intéressante par la réduction du nombre des pièces mises en jeu (pièces mobiles et moyens d'entraînement) et par la simplification structurelle qui en résulte, consiste à mettre en oeuvre une seule trappe mobile propre à assumer sélectivement le rôle de la trappe 20 du premier mode de réalisation ci-dessus et le rôle du doigt mobile 27 du second mode de réalisation ci-dessus. Il suffit pour cela que la trappe 20 du premier mode de réalisation soit apte à être déplacée sélectivement de part ou d'autre de sa position de repos ou position effacée sous l'action, dans le sens convenable, des moyens 18 d'entraînement qui peuvent à cet effet, par exemple, recevoir une commande de présélection de fonctionnement.

## Revendications

1. Dispositif (1) centrifuge d'alimentation en préformes (2b) en matière thermoplastique couchées et alignées à partir de préformes (2a) reçues en vrac, ledit dispositif comprenant :
- un anneau (3) transporteur sensiblement horizontal tournant autour d'un axe (5),
- un disque (6) central rotatif tournant dans le même sens que l'anneau (3) transporteur et d'axe (8) incliné par rapport à celui de l'anneau (3) transporteur,
- le disque (6) et l'anneau (3) étant distants l'un de l'autre dans une zone (10) de chargement en vrac des préformes (2a) sur le disque (6) et étant sensiblement tangents dans une zone (11) de transfert des préformes du disque (6) sur l'anneau (3) située à un niveau supérieur à celui de la zone (10) de chargement,
- un guide (12) latéral entourant périphériquement l'anneau (3) transporteur pour retenir les préformes transférées sur l'anneau, et
- un canal (13) de sortie ouvert dans le guide (12) latéral et s'étendant sensiblement tangentiellement à l'anneau (3) transporteur pour l'évacuation des préformes (2b) couchées et alignées les unes à la suite des autres,
**caractérisé en ce qu'**il comporte en outre :
- un organe (15) mobile monté sur le guide (12) latéral en aval (considéré dans le sens de rotation de l'anneau transporteur) de la susdite zone (11) de transfert et en amont de l'ouverture dudit canal (13) de sortie et propre à occuper une position de repos dans laquelle il n'affecte pas le déplacement des préformes (2b) entraînées par l'anneau (3) transporteur et une position opérationnelle dans laquelle les préformes (2c) sont amenées à quitter l'anneau (3) transporteur,
- des moyens (18) d'actionnement associés fonctionnellement audit organe (15) mobile pour provoquer sélectivement son déplacement entre ses deux positions de repos et opérationnelle, et
- des moyens (19) de détection situés en amont dudit organe (15) mobile et propres à détecter une préforme (2c) indésirable présente sur l'anneau (3) transporteur, lesdits moyens (19) de détection étant fonctionnellement connectés aux moyens (18) d'actionnement de l'organe (15) mobile pour, lorsqu'une préforme (2c) indésirable est détectée, amener l'organe (15) mobile dans sa position opérationnelle appropriée à l'éjection de la préforme indésirable.

2. Dispositif d'alimentation selon la revendication 1, **caractérisé**
**en ce que** l'organe (15) mobile est une trappe (20) mobile propre à fermer une ouverture (21) pratiquée dans le guide (12) latéral et
**en ce que** les moyens (18) d'actionnement sont propres à déplacer ladite trappe (20) sous la commande des moyens (19) de détection et ouvrir ladite ouverture (21) du guide (12) latéral de manière que la préforme (2c) indésirable détectée soit éjectée par l'ouverture (21) sous l'action de la force centrifuge.

3. Dispositif d'alimentation selon la revendication 2, **caractérisé en ce que** la trappe (20) est déplaçable, notamment pivotante, vers l'extérieur du guide (12) latéral.

4. Dispositif d'alimentation selon la revendication 2 ou 3, **caractérisé en ce qu'**il comporte en outre :
un doigt (24) mobile auxiliaire disposé en amont de la trappe (20) et propre à occuper une position effacée dans laquelle il n'engage pas la trajectoire des préformes sur l'anneau (3) transporteur et une position d'éjection pour laquelle il engage la trajectoire des préformes sur l'anneau (3) transporteur et rejette les préformes vers l'intérieur sur le disque (6) rotatif, et
des moyens (26) d'actionnement dudit doigt (24) mobile auxiliaire propre à lui faire occuper sélectivement l'une ou l'autre des deux susdites positions, lesdits moyens (26) d'actionnement étant placés sous la dépendance des moyens (19) de détection de manière telle que le doigt (24) mobile auxiliaire soit dans sa position effacée lors du passage d'une préforme (2c) indésirable détectée et
soit dans sa position d'éjection lors du passage d'au moins la première préforme (2b) suivant la préforme (2c) indésirable détectée pour repousser vers l'intérieur sur le disque (6) rotatif ladite première préforme (2b).

5. Dispositif d'alimentation selon la revendication 1, **caractérisé en ce que** l'organe (15) mobile est un doigt (27) mobile disposé en aval de la susdite zone (11) de transfert et propre à occuper, sous l'action des moyens (19) d'actionnement, une position effacée dans laquelle il n'engage pas la trajectoire des préformes sur l'anneau (3) transporteur et une position d'éjection pour laquelle il engage la trajectoire des préformes sur l'anneau (3) transporteur et rejette les préformes vers l'intérieur sur le disque (6) rotatif.

6. Dispositif d'alimentation selon l'une quelconque des revendications 2 à 4 et selon la revendication 5,
**caractérisé en ce qu'**il est équipé conjointement d'une trappe (20) mobile selon l'une quelconque des revendications 2 à 4 et d'un doigt (27) mobile selon la revendication 5,
ce grâce à quoi l'utilisateur a le choix entre l'élimination des préformes indésirables vers l'extérieur à travers l'ouverture (21) du guide (12) latéral ou vers l'intérieur sur le disque (6) rotatif.

7. Dispositif d'alimentation selon la revendication 6, **caractérisé en ce que** le doigt (27) mobile est disposé en aval de la trappe (20) mobile.

8. Dispositif d'alimentation selon la revendication 6, **caractérisé en ce que** le doigt (27) mobile est disposé en amont de la trappe (20) mobile et est confondu avec le doigt (24) mobile auxiliaire d'éjection d'au moins la première préforme suivant la préforme (2c) indésirable détectée lorsque la trappe (20) mobile est opérationnelle.

9. Dispositif d'alimentation selon la revendication 6, **caractérisé en ce que** la trappe (20) mobile est agencée pour pouvoir être déplacée de part et d'autre de sa position de repos de manière à assumer également la fonction du doigt mobile.

## Claims

1. A centrifugal device (1) for supplying thermoplastic preforms (2b), which are horizontally-laid and aligned, from preforms (2a) received in bulk, said device comprising:
- a substantially horizontal transport ring (3) rotating about an axis (5),
- a central rotary disc (6) rotating in the same direction as the transport ring (3) and having an axis (8) inclined relative to that of the transport ring (3),
- the disc (6) and the ring (3) being at a distance from one another in one zone (10) for loading the preforms (2a) in bulk onto the disc (6) and being substantially tangent in another zone (11) for transferring the preforms from the disc (6) onto the ring (3) located at a higher level than that of the loading zone (10),
- a lateral guide (12) peripherally surrounding the transport ring (3) for retaining the preforms transferred onto the ring, and
- an outlet channel (13) open into the lateral guide (12) and extending substantially tangentially to the transport ring (3) for the removal of the preforms (2b) which are horizontally-laid and aligned in succession,
**characterized in that** it further comprises:
- a mobile member (15) mounted on the lateral guide (12) downstream (when observed in the direction of rotation of the transport ring) of said transfer zone (11) and upstream of the opening of said outlet channel (13) and adapted for occupying a resting position in which it does not affect the displacement of the preforms (2b) driven by the transport ring (3) and an operational position in which the preforms (2c) are forced to leave the transport ring (3),
- actuating means (18) operationally associated with said mobile member (15) to cause its selective displacement between said two resting and operational positions, and
- detection means (19) located upstream of said mobile member (15) and adapted for detecting an undesirable preform (2c) present on the transport ring (3), said detection means (19) being operatively connected to the means (18) for actuating the mobile member (15) in order to force the mobile member (15) into its appropriate operational position for the ejection of the undesirable preform, when an undesirable preform (2c) is detected.

2. The centrifugal device according to Claim 1, **characterized in that** the mobile member (15) is a mobile trap (20) adapted for closing an opening (21) made in the lateral guide (12), and **in that** the actuating means (18) are adapted for displacing said trap (20) under the control of the detection means (19) and opening said opening (21) of the lateral guide (12) so that the detected undesirable preform (2c) is ejected through the opening (21) as a result of the centrifugal force.

3. The centrifugal device according to Claim 2, **characterized in that** the trap (20) is displaceable, in particular pivotable, towards the outside of the lateral guide (12).

4. The centrifugal device according to Claim 2 or 3, **characterized in that** it further comprises: an auxiliary mobile finger (24) arranged upstream of the trap (20) and adapted for occupying a retracted position in which it is not in the trajectory of the preforms on the transport ring (3) and an ejection position for which it is in the trajectory of the preforms on the transport ring (3) and rejects the preforms towards the inside onto the rotary disc (6) and
means (26) for actuating said mobile auxiliary finger (24) adapted for making said mobile auxiliary finger occupy selectively one or other of the two aforementioned positions, said actuating means (26) being dependent on the detection means (19) such that the auxiliary mobile finger (24) is in its retracted position during the passage of a detected undesirable preform (2C) and in its ejection position during the passage of at least the first preform (2b) following the detected undesirable preform (2c), to push back said first preform (2b) towards the inside on the rotary disc (6).

5. The centrifugal device according to Claim 1, **characterized in that** the mobile member (15) is a mobile finger (27) arranged downstream of the aforementioned transfer zone (11) and adapted for occupying, under the actuation of the actuating means (19), a retracted position in which it is not in the trajectory of the preforms on the transport ring (3) and an ejection position for which it is in the trajectory of the preforms on the transport ring (3) and rejects the preforms towards the inside onto the rotary disc (6).

6. The centrifugal device according to any one of Claims 2 to 4 and according to Claim 5, **characterized in that** it is jointly equipped with a mobile trap (20) according to any one of Claims 2 to 4 and a mobile finger (27) according to Claim 5,
whereby the user has the choice between the removal of the undesirable preforms towards the outside through the opening (21) of the lateral guide (12) or towards the inside onto the rotary disc (6).

7. The centrifugal device according to Claim 6, **characterized in that** the mobile finger (27) is arranged downstream of the mobile trap (20).

8. The centrifugal device according to Claim 6, **characterized in that** the mobile finger (27) is arranged upstream of the mobile trap (20) and is combined with the auxiliary mobile finger (24) for ejecting at least the first preform following the detected undesirable preform (2c) when the mobile trap (20) is operational.

9. The centrifugal device according to Claim 6, **characterized in that** the mobile trap (20) is arranged to be able to be displaced on both sides from its resting position so as to assume also the function of the mobile finger.

## Patentansprüche

1. Fliehkraftvorrichtung (1) zum Zuführen von liegenden und ausgerichteten Vorformlingen (2b) aus einem thermoplastischen Werkstoff aus lose aufgenommenen Vorformlingen (2a), wobei die Vorrichtung Folgendes umfasst:
- einen im Wesentlichen horizontalen Transportring (3), der sich um eine Achse (5) dreht,
- eine mittige Drehscheibe (6), die sich in dieselbe Richtung dreht wie der Transportring (3) und eine Achse (8) aufweist, die zu der des Transportrings (3) geneigt ist,
- wobei die Scheibe (6) und der Ring (3) in einem Bereich (10) zum Beladen der Scheibe (6) mit den losen Vorformlingen (2a) einen Abstand zueinander aufweisen und sich in einem Bereich (11) zum Befördern der Vorformlinge von der Scheibe (6) auf den Ring (3), der höher liegt als der Beladebereich (10), im Wesentlichen tangential zum einandern verlaufen,
- eine seitliche Führung (12), die den Transportring (3) am Umfang umgibt, um die Vorformlinge zu halten, die auf den Ring befördert wurden, und
- einen offenen Auslaufkanal (13) in der seitlichen Führung (12), der im Wesentlichen tangential zum Transportring (3) verläuft, zum Abtransport der liegenden und hintereinander ausgerichteten Vorformlinge (2b),
**dadurch gekennzeichnet, dass** sie weiterhin Folgendes aufweist:
- ein bewegliches Element (15), das auf der seitlichen Führung (12) hinter (in der Drehrichtung des Transportrings betrachtet) dem vorgenannten Beförderungsbereich (11) und vor der Öffnung des Auslaufkanals (13) montiert ist und sich dafür eignet, eine Ruhestellung einzunehmen, in der es die Weiterbewegung der vom Transportring (3) mitgeführten Vorformlinge (2b) nicht beeinflusst, und eine Arbeitsstellung, in der die Vorformlinge (2c) dazu gebracht werden, den Transportring (3) zu verlassen,
- Betätigungsmittel (18), die funktionell dem beweglichen Element (15) zugeordnet sind, um gezielt dessen Verschiebung zwischen den beiden Stellungen, der Ruhestellung und der Arbeitsstellung, zu bewirken, und
- Erfassungsmittel (19), die sich vor dem beweglichen Element (15) befinden und dafür eignen, einen unerwünschten Vorformling (2c) auf dem Transportring (3) zu erfassen, wobei die Erfassungsmittel (19) funktionell mit den Betätigungsmitteln (18) für das bewegliche Element (15) verbunden sind, um, wenn ein unerwünschter Vorformling (2c) erfasst wird, das bewegliche Element (15) in seine Arbeitsstellung zu bringen, in welcher der unerwünschte Vorformling ausgestoßen werden kann.

2. Zuführvorrichtung nach Anspruch 1,
**dadurch gekennzeichnet, dass** das bewegliche Element (15) eine bewegliche Klappe (20) ist, die eine in der seitlichen Führung (12) vorgesehene Öffnung (21) verschließen kann, und
dadurch, dass sich die Betätigungsmittel (18) dafür eignen, die Klappe (20) gesteuert von den Erfassungsmitteln (19) zu bewegen und die Öffnung (21) der seitlichen Führung (12) derart zu öffnen, dass der erfasste unerwünschte Vorformling (2c) unter Einwirkung der Fliehkraft durch die Öffnung (21) ausgestoßen wird.

3. Zuführvorrichtung nach Anspruch 2, **dadurch gekennzeichnet, dass** die Klappe (20) von der seitlichen Führung (12) weg nach außen bewegt, insbesondere geschwenkt, werden kann.

4. Zuführvorrichtung nach Anspruch 2 oder 3, **dadurch gekennzeichnet, dass** sie weiterhin Folgendes aufweist: einen beweglichen zusätzlichen Finger (24), der vor der Klappe (20) angeordnet ist und sich dafür eignet, eine zurückgezogene Stellung einzunehmen, in der er den Weg der Vorformlinge auf dem Transportring (3) nicht behindert, und eine Ausstoßstellung, bei der er den Weg der Vorformlinge auf dem Transportring (3) behindert und die Vorformlinge nach innen auf die Drehscheibe (6) zurückwirft, und
Betätigungsmittel (26) für den beweglichen zusätzlichen Finger (24), die dazu geeignet sind, ihn gezielt die eine oder andere der beiden vorgenannten Stellungen einnehmen zu lassen, wobei die Betätigungsmittel (26) derart abhängig von den Erfassungsmitteln (19) positioniert sind, dass sich der bewegliche zusätzliche Finger (24) während des Vorbeilaufens eines erfassten unerwünschten Vorformlings (2c) in der zurückgezogenen Stellung befindet, und sich während des Vorbeilaufens von mindestens dem ersten Vorformling (2b) nach dem erfassten unerwünschten Vorformling (2c) in der Ausstoßstellung befindet, um den ersten Vorformling (2b) nach innen auf die Drehscheibe (6) zurückzuschieben.

5. Zuführvorrichtung nach Anspruch 1, **dadurch gekennzeichnet, dass** das bewegliche Element (15) ein beweglicher Finger (27) ist, der hinter dem vorgenannten Beförderungsbereich (11) angeordnet ist und sich dafür eignet, unter Einwirkung der Betätigungsmittel (18) eine zurückgezogene Stellung einzunehmen, in der er den Weg der Vorformlinge auf dem Transportring (3) nicht behindert, und eine Ausstoßstellung, bei der er den Weg der Vorformlinge auf dem Transportring (3) behindert und die Vorformlinge nach innen auf die Drehscheibe (6) zurückwirft.

6. Zuführvorrichtung nach einem der Ansprüche 2 bis 4 und nach Anspruch 5, **dadurch gekennzeichnet, dass** sie gemeinsam mit einer beweglichen Klappe (20) nach einem der Ansprüche 2 bis 4 und mit einem beweglichen Finger (27) nach Anspruch 5 ausgestattet ist,
wodurch der Benutzer die Wahl hat zwischen dem Ausstoßen der unerwünschten Vorformlinge nach außen durch die Öffnung (21) der seitlichen Führung (12) oder nach innen auf die Drehscheibe (6).

7. Zuführvorrichtung nach Anspruch 6, **dadurch gekennzeichnet, dass** der bewegliche Finger (27) hinter der beweglichen Klappe (20) angeordnet ist.

8. Zuführvorrichtung nach Anspruch 6, **dadurch gekennzeichnet, dass** der bewegliche Finger (27) vor der beweglichen Klappe (20) angeordnet ist und mit dem beweglichen zusätzlichen Finger (24) zum Ausstoßen von mindestens dem ersten Vorformling nach dem erfassten unerwünschten Vorformling (2c) zusammenfällt, wenn die bewegliche Klappe (20) einsatzbereit ist.

9. Zuführvorrichtung nach Anspruch 6, **dadurch gekennzeichnet, dass** die bewegliche Klappe (20) so angeordnet ist, dass sie auf beide Seiten der Ruhestellung bewegt werden kann, um auch die Aufgabe des beweglichen Fingers zu übernehmen.
